# EUROPEAN PATENT APPLICATION

(11) **EP 4 131 512 A1**
(43) Date of publication of application: **08.02.2023**
(21) Application number: 21775486.0
(22) Date of filing: 14.01.2021
(51) Int. Cl.: H01M 4/66

(54) **CONDUCTIVE FILM, PREPARATION PROCESS THEREFOR, ELECTRODE PLATE AND BATTERY**

(30) Priority: 27.03.2020 CN 202010233536; 27.03.2020 CN 202020415366 U
(71) Applicant: Shenzhen Hairun New Energy Technology Co., Ltd., Shenzhen, Guangdong 518057 (CN); Xiamen Hithium Energy Storage Technology Co., Ltd., Xiamen, Fujian 361006 (CN)
(72) Inventor: WU, Tingting, Shenzhen, Guangdong 518000 (CN); FENG, Junmin, Shenzhen, Guangdong 518000 (CN); ZHANG, Wancai, Shenzhen, Guangdong 518000 (CN)
(74) Representative: DREISS Patentanwälte PartG mbB
(86) International application number: PCT/CN2021/071676
(87) International publication number: WO 2021/190101

(57) **Abstract**

Provided are a conductive film (100), a preparation process therefor, an electrical plate, and a battery, relating to the conductive film technology. The conductive film (100) includes a substrate film (110), a functional layer (120) and a protective layer (130) that are sequentially arranged on the substrate film (110). The substrate film (110) is a modified bidirectionally oriented polypropylene film. The substrate film (110) has a tensile strength in a mechanical direction greater than or equal to 200 MPa, and an elongation at break in the mechanical direction greater than or equal to 75%. The conductive film (100) adopts the modified bidirectionally oriented polypropylene film as the substrate film, which has a relatively high tensile strength and a suitable elongation at break compared with the conventional bidirectionally oriented polypropylene film (BOPP), and thus the conductive film (110) has a relatively high tensile strength and elongation at break. The use performance is improved, and a strip breakage during the machining process is reduced, thereby improving the yield.

## Description

### CROSS-REFERENCE TO RELATED APPLICATIONS

The present application claims priorities to Chinese Patent Application No. 202010233536.3, entitled "CONDUCTIVE FILM, PREPARATION PROCESS THEREFOR, ELECTRODE PLATE AND BATTERY", and Chinese Patent Application No. 202020415366.6, entitled "CONDUCTIVE FILM, ELECTRODE PLATE AND BATTERY", both filed with China National Intellectual Property Administration on March 27, 2020. The disclosures of the aforementioned applications are hereby incorporated by reference in their entireties.

### FIELD

The present disclosure relates to the technical field of conductive films, and more particularly, to a conductive film, a preparation process therefor, an electrode plate, and a battery.

### BACKGROUND

With the continuous development and advance of power battery technology, the requirements for lightweight and high energy density of batteries are gradually increasing, and meanwhile, it is a big challenge in the consumer market to reduce the cost of batteries. Therefore, it becomes gradually mature that multi-layered composite conductive film as current collector takes place of the conventional copper-aluminum foil. At present, due to many processing procedures and other reasons of the conventional materials used as a substrate film of the multi-layered film, the corresponding physical properties of products are not ideal, which affects the development of multi-layered composite conductive films as current collectors.

Bidirectionally oriented polypropylene (BOPP) film is a polymer flexible material. However, the multi-layered composite conductive film directly made of the BOPP material has poor performance and thus cannot be used as a current collector.

### SUMMARY

The present disclosure aims to provide a conductive film, a preparation process for the conductive film, an electrode plate, and a battery. By using a substrate film with better tensile mechanical properties, the technical problem of poor tensile property of the conductive film in the related art can be addressed.

To achieve at least one of the above objects of the present disclosure, the present disclosure may employ the following technical methods.

In the first aspect, embodiments of the present disclosure provide a conductive film having a multi-layer structure. The conductive film includes a substrate film, a functional layer, and a protective layer. The substrate film is a modified bidirectionally oriented polypropylene film. The functional layer and the protective layer are sequentially arranged on the substrate film. A tensile strength in a mechanical direction of the substrate film is greater than or equal to 200 MPa, and an elongation at break in the mechanical direction of the substrate film is greater than or equal to 75%.

The conductive film adopts the modified bidirectionally oriented polypropylene film as a substrate film, which has a relatively high tensile strength and a suitable elongation at break compared with the conventional bidirectionally oriented polypropylene film (BOPP). In this way, the conductive film has a relatively high tensile strength and a suitable elongation at break, thereby improving the use performance; and a breakage of a strip can be reduced during the machining process, thereby improving the yield.

In a possible implementation, the tensile strength in the mechanical direction of the substrate film ranges from 220 MPa to 260 MPa. The substrate film with the tensile strength in an MD can allow the conductive film to have a relatively high tensile strength and a suitable elongation at break.

In a possible implementation, the substrate film is prepared by a method including: performing, under a condition that a stretching ratio in a width direction of the substrate film ranges from 8 times to 10 times and a stretching ratio in the mechanical direction of the substrate film is greater than or equal to 6.2 times, a bidirectional synchronous stretching on a polypropylene film by using a bidirectional synchronous stretching process.

In a possible implementation, the stretching ratio in the width direction of the substrate film ranges from 8 times to 8.5 times, and the stretching ratio in the mechanical direction of the substrate film ranges from 6.5 times to 6.8 times.

The preparation process improves the tensile strength of the substrate film by increasing the stretching ratio of biaxial synchronous stretching.

In a possible implementation, the substrate film has a thickness ranging from 2.0 µm to 8.0 µm. In a possible implementation, when the thickness of the substrate film ranges from 3 µm to 3.3 µm, the elongation at break in the mechanical direction of the substrate film is greater than or equal to 75%; or when the thickness of the substrate film ranges from 3.4 µm to 3.8 µm, the elongation at break in the mechanical direction of the substrate film is greater than or equal to 80%; or when the thickness of the substrate film ranges from 4 µm to 5 µm, the elongation at break in the mechanical direction of the substrate film is greater than or equal to 90%.

With the increase of the stretching ratio of bidirectional synchronous stretching and the improvement of the tensile strength of the substrate film, it is necessary to ensure that the substrate film has a certain elongation at break. When the elongation at break of the substrate film is within the above range, the substrate film can have better tensile mechanical properties to meet the tensile property of the conductive film.

In a possible implementation, the conductive film further includes an adhesive layer and a transition layer that are arranged between the substrate film and the functional layer. The adhesive layer and the transition layer are sequentially arranged on the substrate film.

In a second aspect, the embodiments of the present disclosure provide an electrode plate including the conductive film described above, and an active material coated on the conductive film. The electrode plate has a relatively high tensile strength and elongation at break, thereby enhancing the yield in the processing process and reducing a yield loss caused by the breakage of strip materials.

In a third aspect, the embodiments of the present disclosure provide a battery. The battery includes a housing, a battery cell accommodated in the housing, an insulation member arranged between the battery cell and the housing, and a top cover assembly disposed to cover the housing and connected to the battery cell through a tab. The battery cell includes the electrode plate as described above.

In the use of the battery, it can be reduced that the current collectors may be easily torn and damaged when subjected to changes such as movement, thermal expansion, cold shrink, extrusion, deformation, etc., and thus the occurrence of battery failure can be reduced.

In a fourth aspect, the embodiments of the present disclosure provide a preparation process for a conductive film. The preparation process includes: performing a bidirectional synchronous stretching on a casting sheet to obtain a film material, in which a stretching ratio in a width direction ranges from 8 times to 10 times, and a stretching ratio in a mechanical direction is greater than or equal to 6.2 times; winding the stretched film material, standing, and aging to obtain the substrate film; and sequentially forming the functional layer and the protective layer on a surface of the substrate film. Through the preparation process, the tensile strength of the substrate film can be increased by improving the stretching ratio of bidirectional synchronous tensile, thereby obtaining the conductive film with better tensile property.

### BRIEF DESCRIPTION OF DRAWINGS

In order to clearly explain technical solutions of embodiments of the present disclosure, the drawings used for describing the embodiments or the prior art are briefly introduced below. It should be understood that the drawings described below are merely some embodiments of the present disclosure, and they should not be taken as limiting the scope of the present disclosure. Based on these drawings, those skilled in the art can obtain other drawings without paying creative effort.
FIG. 1 is a schematic structural diagram of a conductive film according to an embodiment of the present disclosure; and
FIG. 2 is a schematic structural diagram of a conductive film according to another embodiment of the present disclosure.

Reference signs: 100-conductive film; 110-substrate film; 120-functional layer; 130-protective layer; 140-adhesive layer; and 150-transition layer.

### DESCRIPTION OF EMBODIMENTS

In order to clearly explain the objects, technical solutions and advantages of the present disclosure, the technical solutions of the embodiments of the present disclosure are described in detail below with reference to accompanying drawings and embodiments. Obviously, the described embodiments are a part of, rather than all of, the embodiments of the present disclosure. Generally, the components in the embodiments of the present disclosure described and illustrated in the accompanying drawings herein may be arranged and designed in a variety of different configurations. Accordingly, the following detailed description of the embodiments of the present disclosure provides in the accompanying drawings is not intended to limit the scope of the present disclosure as claimed, but they are merely representative of selected embodiments of the present disclosure. Based on the embodiments in the present disclosure, all other embodiments obtained by those skilled in the art without paying creative efforts shall fall within the scope of protection of the present disclosure.

At present, polymer flexible materials mainly used in a substrate film of a multi-layer composite conductive film includes, for example, polypropylene (PP), polyethylene terephthalate (PET), polyimide (PI), PPS, or polyethylene (PE). Among the several flexible materials, BOPP is a thin film with the lowest density, and it is one of the best materials for multi-layer composite conductive copper film. BOPP has been widely used in the field of making capacitor films. However, if the multi-layer composite conductive copper film is directly made of BOPP material for making capacitive film, final products are often characterized by low tensile strength (MD tensile strength smaller than or equal to 130 MPa) and low elongation at break (MD elongation at break smaller than or equal to 2.8%). When the multi-layer composite conductive copper film product is used as a current collector, it often causes difficult manufacturing process and low yield of battery cells. Especially, the negative electrode coating, when passing through the oven, is easy to cause a strip breakage, the electrode plate material is likely to crack when it is cold pressed. At the same time, the material is likely to break when it is subjected to cold shrink and hot expansion after the battery cell is manufactured, failing to support the basic structure of the battery cell.

In the conductive film provided by the present disclosure, the modified BOPP, which has better tensile strength and elongation at break than the conventional BOPP, is adopted as a substrate film. In this way, the tensile performance of the substrate film is improved, thereby improving the tensile performance of the conductive film and reducing the occurrence of tearing and breakage of a negative current collector in the use of a battery material. Some embodiments of the present disclosure are described in detail below with reference to the accompanying drawings.

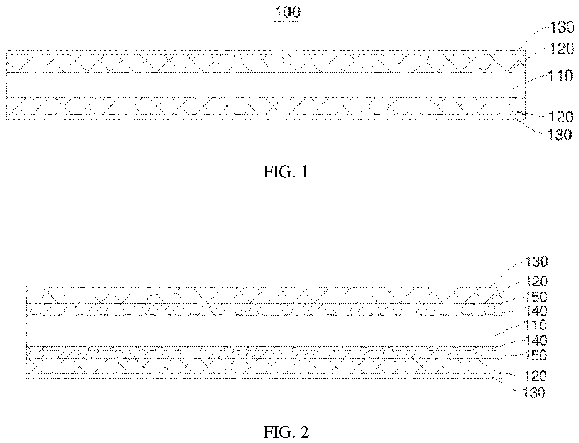

Referring to FIG. 1 and FIG. 2, FIG. 1 and FIG. 2 are schematic structural diagrams of a conductive film 100 having two different layer structures according to the embodiments of the present disclosure.

The embodiments of the present disclosure provide a conductive film 100 having a multi-layer structure. In some embodiments of the present disclosure, the conductive film includes a substrate film 110, a functional layer 120, and a protective layer 130. The functional layer 120 and the protective layer 130 are sequentially arranged on the substrate film 110. Preferably, the functional layer 120 and the protective layer 130 are sequentially arranged on each of two opposite surfaces of the substrate film 110.

In other embodiments of the present disclosure, as illustrated in FIG. 2, the conductive film may further include an adhesive layer 140 and a transition layer 150 that are arranged between the substrate film and the functional layer. The adhesive layer 140 and the transition layer 150 are sequentially arranged on the substrate film. Preferably, the adhesive layer 140 and the transition layer 150 are sequentially arranged on each of two opposite surfaces of the substrate film 110.

For the multi-layer composite conductive film, the tensile property has a great influence on the performance of the conductive film. In the present disclosure, the modified BOPP with excellent tensile property is obtained by innovating the preparation process of BOPP.

Further, the preparation process of the modified BOPP includes: placing masterbatches into a feeding device, performing extrusion by controlling and maintaining a temperature of a melting extrusion section at 210°C to 260°C; and flow-casting the casting sheet by controlling a temperature of the casting sheet at 60°C to 100°C.

Optionally, the temperature of the extrusion section may be 210°C, 230°C, 250°C, or 260°C.

Optionally, the temperature of the casting sheet can be controlled to be 60°C, 70°C, 90°C, or 100°C.

After the casting sheet is obtained, the casting sheet is synchronously bidirectionally stretched to obtain a film material having a certain thickness. A production linear speed of bidirectional synchronous stretching ranges from 230 m/min to 260 m/min. A stretching ratio in a width direction (TD) ranges from 8 times to 10 times, and a stretching ratio in a mechanical direction (MD) is greater than or equal to 6.2 times. Optionally, the production line speed of bidirectional synchronous stretching is 230 m/min, 240m/min, 250m/min, or 260m/min.

After the stretching treatment, PP macromolecular chains and a crystalline structure in the BOPP film are highly oriented, and thus the tensile strength and modulus of the film as well as the MD elongation at break are significantly improved. Thus, the film can have lower haze, better transparency and higher glossiness. In the preparation process, the stretching ratio of bidirectional synchronous stretching, as an important process parameter, has not only a great influence on a stress-strain behavior of the films, but it restricts the properties of the film and determines whether the stretching can be performed smoothly. The experimental study indicates that the tensile parameters in the MD and TD have influence on the tensile mechanical properties of the substrate film. However, the tensile processes in the MD and TD are different, and thus their influences on the tensile property of the substrate film are also different. The stretching ratio in MD has influence on the tensile modulus and MD tensile strength and the TD, and the stretching ratio in TD mainly affects the TD tensile strength. Based a large number of experimental studies, when the tensile property in the MD changes, the tensile property in the TD also changes accordingly. Therefore, when adjusting the stretching process of bidirectional synchronous stretching, it is necessary to consider the influence of each parameter on the tensile mechanical properties of the substrate film in many aspects.

Through a large number of experimental studies, the Applicant has come to a conclusion that the preparation process of the present disclosure can improve the stretching ratio, when compared with the stretching ratio of the conventional BOPP. The stretching ratio in TD ranges from 8 times to10 times, and the stretching ratio in MD is greater than or equal to 6.2 times. In some embodiments of the present disclosure, the stretching ratio of the substrate film in the TD ranges from 8 times to 8.5 times, and the stretching ratio in MD ranges from 6.5 times to 6.8 times. Optionally, the stretching ratio in TD is 8 times, 8.3 times, 8.5 times, 9 times, 9.3 times, 9.5 times, 90.7 times, or 10 times. The stretching ratio in MD is 6.2 times, 6.5 times, 6.6 times, 6.7 times, 6.8 times, or 7 times.

The stretched film material is winded for standing and aging. In the embodiments of the present disclosure, the stretched film material is preferably placed in an environment with a cleanliness level of 100,000, a temperature of 25°C ± 5°C, and a humidity ranging from 40% to 70%, for 34 hours to 38 hours, and the film material can be cut into substrate films with required width after standing and aging. Optionally, the humidity of the environment may be 40%, 50%, 60%, or 70%. Optionally, a standing duration may be 34 hours, 36 hours, or 38 hours.

The based film prepared through the above preparation process, i.e., the modified BOPP, has a MD tensile strength greater than or equal to 200 MP, and an MD elongation at break greater than or equal to 75%. Compared with the existing BOPP material, the tensile mechanical properties of the modified BOPP prepared in the present disclosure can satisfy the requirements on the mechanical properties of the electrode plate on the conductive film. In some embodiments of the present disclosure, the MD tensile strength of the substrate film ranges from 220 MPa to 260 MPa. Optionally, the MD tensile strength of the substrate film is 220 MPa, 230 MPa, 240 MPa, 250 MPa, or 260 MPa.

The thickness of the substrate film in the embodiments of the present disclosure ranges from 2.0 µm to 8.0 µm. The tensile mechanical properties of the substrate films may vary with different stretching processes and thicknesses. In order to employ the conductive film as a current collector, in some embodiments of the present disclosure, when the thickness of the substrate film ranges from 3 µm to 3.3 µm, it is preferable that the MD elongation at break of the substrate film is greater than or equal to 75%; when the thickness of the substrate film ranges from 3.4 µm to 3.8 µm, the MD elongation at break of the substrate film is greater than or equal to 80%; when the thickness of the substrate film ranges from 4 µm to 5 µm, the MD elongation at break of the substrate film is greater than or equal to 90%.

Further, the present disclosure also provides a preparation process for the above-mentioned conductive film. The preparation process includes: preparing, as a substrate film, modified BOPP according to the preparation process of the modified BOPP.

An adhesive layer is formed on each of two surfaces of the substrate film. In an implementable example, the substrate film coil is placed in a double-sided magnetron sputtering coating machine; NiCr can be selected as the material of the adhesive layer; a vacuum chamber is sealed and is then vacuumized step by step until a vacuum degree smaller than 8×10⁻³ Pa; then an Ar gas is released as a bombardment gas; under the working vacuum ranging from 0.1 Pa to 0.8 Pa, at a film moving speed ranging from 10 m/min to 70 m/min, an adhesive layer is deposited on each of the two sides of the substrate film, with a thickness generally ranging from 2 nm to 20 nm. Furthermore, the film moving speed can be 10 m/min, 30 m/min, 50 m/min, or 70 m/min. A transition layer is formed on the surface of the adhesive layer. In an implementable example, the film coil coated with the adhesive layer is placed in a double-sided magnetron sputtering coating machine, Cu with a purity greater than or equal to 99.999% can be used as a target material; the vacuum chamber is sealed and is then vacuumized step by step until the vacuum degree smaller than 8×10⁻³ Pa; then the Ar gas is introduced as a bombardment gas; under the working vacuum ranging from 0.1 Pa to 0.8 Pa, at a film moving speed ranging from 20 m/min to 40 m/min, a transition layer is deposited on the surface of each of the two adhesive layers, with a thickness generally ranging from 10 nm to 50 nm. Further, the film moving speed can be 20 m/min, 30 m/min, or 40 m/min.

A functional layer is formed on the surface of the transition layer. In an implementable example, a film coil coated with the conductive adhesive layers and transition layers is placed in a coil-to-coil water plating apparatus, with a conductive film surface block resistance ranging from 0.5 S2 to 1 Ω; a winding and unwinding speed, a current, a copper ion concentration, a brightener concentration, an adjuvant concentration, pH value, and an electrolyte temperature are appropriately adjusted; and then a functional layer with a thickness ranging from 800 nm to 1200 nm is formed on the surface of each of the two transition layers.

A protective layer is formed on the surface of the functional layer. In an implementable example, the coil having the functional layer is placed into a coil-to-coil surface coating device or apparatus; the material is passes through the coating device by winding and conveying the film; the coating device can evenly coat the organic material with proper concentration and anti-oxidation performance on the surface of the functional layer; and then a coating layer, i.e., a protective layer, can be formed on the surface of the functional layer by adjusting an appropriate winding and unwinding speed.

The conductive film provided in the present disclosure adopts the modified BOPP material having a relatively high tensile strength and a relatively high elongation at break. The MD tensile strength is greater than or equal to 130MPa, and further, it may range from 135 MPa to 160 MPa; and the MD elongation at break is greater than or equal to 3%, and further, it may range from 3.2% to 9%.

Further, the embodiments of the present disclosure also provide an electrode plate (not shown) and a battery (not shown). The battery includes a housing, a battery cell accommodated in the housing, an insulation member arranged between the battery cell and the housing, and a top cover assembly disposed to cover the housing and connected to the battery cell through a tab. The battery cell includes the electrode plate described above. The electrode plate includes the conductive film and an active material coated on the conductive film.

The conductive film provided by the present disclosure has a relatively high tensile strength and a relatively high elongation at break, and thus the electrode plate has a relatively high tensile strength, a relatively high elongation at break, and a relatively high yield in the processing process; the yield loss caused by the breakage of the strip material is reduced, and the yield is improved by more than 30%. In the use of the prepared battery, it can be reduced that the current collectors are easily torn and damaged when subjected to changes such as movement, thermal expansion, cold shrink, extrusion, deformation, etc., and thus the occurrence of battery failure is reduced.

The features and performances of the present disclosure are described in further detail below in connection with embodiments.

### Example 1

The present example provides a modified BOPP, which was prepared by the following steps.

Masterbatches were placed in a feeding device; extrusion was performed by controlling and maintaining a temperature of a melting extrusion section at 230°C; and the casting sheet was flow-casted by controlling a temperature of the casting sheet at 90°C.

Then, a bidirectional synchronous stretching was performed in a bidirectional synchronous stretching device, a production line speed was controlled at 230 m/min, a stretching ratio in TD was 8.3 times, and a stretching ratio in MD was 6.8 times. A film with a thickness of 3.2 µm was obtained.

Then, the stretched film was winded for standing and aging, and it was placed in an environment with a cleanliness level of 100,000, a temperature of 25°C ± 5°C, and a humidity of 50 % for 36 hours. Then, it was cut into coils with a required width.

### Example 2

The present example provides a modified BOPP, which was prepared by the following steps.

Masterbatches were placed in a feeding device; extrusion was performed by controlling and maintaining a temperature of a melting extrusion section at 240°C; and the casting sheet was flow-casted by controlling a temperature of the casting sheet at 80°C.

Then, a bidirectional synchronous stretching was performed in a bidirectional synchronous stretching device, a production line speed was controlled at 240 m/min, a stretching ratio in TD was 8.3 times, and a stretching ratio in MD was 6.7 times. A film with a thickness of 3.6 µm was obtained.

Then, the stretched film was winded for standing and aging, and it was placed in an environment with a cleanliness level of 100,000, a temperature of 25°C ± 5°C, and a humidity of 50 % for 36 hours. Then, it was cut into coils with a required width.

### Example 3

The present example provides a modified BOPP, which was prepared by the following steps.

Masterbatches were placed in a feeding device; extrusion was performed by controlling and maintaining a temperature of a melting extrusion section at 230°C; and the casting sheet was flow-casted by controlling a temperature of the casting sheet at 80°C.

Then, a bidirectional synchronous stretching was performed in a bidirectional synchronous stretching device, a production line speed was controlled at 250 m/min, a stretching ratio in TD was 8.3 times, and a stretching ratio in MD was 6.6 times. A film with a thickness of 4.5 µm was obtained.

Then, the stretched film was winded for standing and aging, and it was placed in an environment with a cleanliness level of 100,000, a temperature of 25°C ± 5°C, and a humidity of 60 % for 36 hours. Then, it was cut into coils with a required width.

### Example 4

The embodiment provides a conductive film, which was prepared by the following steps.
1. The modified BOPP with a thickness of 3.2 µm provided in Example 1 was used as a substrate film, and an adhesive layer was formed on each of two surfaces of the substrate film. Ni was selected as the material of the adhesive layer. The substrate film coil was placed in a double-sided magnetron sputtering coating machine; the vacuum chamber was sealed and then vacuumized step by step until a vacuum degree reaching 5×10⁻³ Pa; then Ar gas was introduced as a bombardment gas; under a working vacuum of 0.4 Pa, at a film moving speed of 20 m/min, an adhesive layer was deposited on each of the two sides of the substrate film, with a thickness generally ranging from 2 nm to 15 nm.
2. A transition layer was formed on the surface of the adhesive layer. The film coil coated with the adhesive layer was placed in a double-sided magnetron sputtering coating machine. Cu was selected as the material of the transition layer. The vacuum chamber was sealed and then vacuumized step by step until the vacuum degree reaching 7×10⁻³ Pa; then the Ar gas was introduced as a bombardment gas; under the working vacuum of 0.3 Pa, at a film moving speed of 30 m/min, an adhesive layer was deposited on each of the two sides of the substrate film, with a thickness of the transition layer generally ranging from 20 nm to 50 nm.
3. A functional layer was formed on the surface of the transition layer. The film coil coated with the conductive adhesive layer and transition layer was placed in a coil-to-coil water plating device, with a conductive film surface square resistance of 2 Ω; a winding and unwinding speed, a current, a copper ion concentration, a brightener concentration, an adjuvant concentration, pH value, and an electrolyte temperature are appropriately adjusted; and a functional layer with a thickness ranging from 800 nm to 1200 nm was formed on the surface of each of the two transition layers.
4. A protective layer was formed on the surface of the functional layer. The coil having the functional layer was placed into a coil-to-coil water electroplating device or apparatus; potassium dichromate was used as antioxidant; and a coating layer, i.e., a protective layer, was formed on the surface of the functional layer by appropriately adjusting a winding and unwinding coiling speed, a current, and an electrolyte temperature.

### Example 5

The embodiment provides a conductive film, which was prepared by the following steps.
1. The modified BOPP with a thickness of 3.6 µm provided in Example 2 was used as a substrate film, and an adhesive layer was formed on each of two surfaces of the substrate film. NiCr was selected as the material of the adhesive layer. The substrate film coil was placed in a double-sided magnetron sputtering coating machine; the vacuum chamber was sealed and then vacuumized step by step until a vacuum degree reaching 7×10⁻³ Pa; then Ar gas was introduced as a bombardment gas; under a working vacuum of 0.2 Pa, at a film moving speed of 60 m/min, an adhesive layer was deposited on each of the two sides of the substrate film, with a thickness generally ranging from 2 nm to 20 nm.
2. A transition layer was formed on the surface of the adhesive layer. The film coil coated with the adhesive layer was placed in a double-sided magnetron sputtering coating machine. The conductive film surface square resistance was 15 Ω. Under the appropriately adjusted winding and unwinding speed, current, copper ion concentration, brightener concentration, auxiliary agent concentration, PH value, and electrolyte temperature, a transition layer with a thickness ranging from 60 nm to 180 nm was formed on the surface of the adhesive layer.
3. A functional layer was formed on the surface of the transition layer. The film coil coated with the conductive adhesive layer and transition layer was placed in a coil-to-coil water plating device, with a conductive film surface square resistance of 0.3 Ω; a winding and unwinding speed, a current, a copper ion concentration, a brightener concentration, an adjuvant concentration, pH value, and an electrolyte temperature were appropriately adjusted; and a functional layer with a thickness ranging from 800 nm to 1200 nm was formed on the surface of each of the two transition layers.
4. A protective layer was formed on the surface of the functional layer. The coil having the functional layer was placed into a coil-to-coil water electroplating device or apparatus. The film was wound and conveyed to allow the material to pass through the coating device, and in the coating device, the organic material with proper concentration and anti-oxidation performance was evenly coated on the surface of the functional layer. Then, a coating layer, i.e., a protective layer, was formed on the surface of functional layer by appropriately adjusting a winding and unwinding speed.

### Example 6

The embodiment provides a conductive film, which was prepared by the following steps.
1. The modified BOPP with a thickness of 4.5 µm provided in Example 3 was used as a substrate film, and an adhesive layer was formed on each of two surfaces of the substrate film. NiCr was selected as the material of the adhesive layer. The substrate film coil was placed in a double-sided magnetron sputtering coating machine; the vacuum chamber was sealed and then vacuumized step by step until a vacuum degree reaching 5×10⁻³ Pa; then Ar gas was introduced as a bombardment gas; under a working vacuum of 0.5 Pa, at a film moving speed of 60 m/min, an adhesive layer was deposited on each of the two sides of the substrate film, with a thickness generally ranging from 2 nm to 20 nm.
2. A transition layer was formed on the surface of the adhesive layer. The film coil coated with the adhesive layer was placed in a double-sided magnetron sputtering coating machine. Cu with a purity greater than or equal to 99.999% was used as a target material. The vacuum chamber was sealed and vacuumized step by step until the vacuum degree reaching 5×10⁻³ Pa, and then the Ar gas was introduced as a bombardment gas. Under the working vacuum of 0.1 Pa, at a film moving speed of 30 m/min, a transition layer was deposited on the surface of each of the two adhesive layers, with a thickness generally ranging from 10 nm to 50 nm.
3. A functional layer was formed on the surface of the transition layer. The film coil coated with the conductive adhesive layer and transition layer was placed in a coil-to-coil water plating device, with a conductive film surface square resistance of 0.6 Ω; a winding and unwinding speed, a current, a copper ion concentration, a brightener concentration, an adjuvant concentration, pH value, and an electrolyte temperature were appropriately adjusted; and a functional layer with a thickness ranging from 800 nm to 1200 nm was formed on the surface of each of the two transition layers.
4. A protective layer was formed on the surface of the functional layer. The coil having the functional layer was placed into a coil-to-coil water electroplating device or apparatus. The film was wound and conveyed to allow the material to pass through the coating device, and in the coating device, the organic material with proper concentration and anti-oxidation performance was evenly coated on the surface of the functional layer. Then, a coating layer, i.e., a protective layer, was formed on the surface of functional layer by appropriately adjusting a winding and unwinding speed.

### Comparative Example 1

The present comparative example provides a BOPP material with a thickness of 3.2 µm. The present comparative example differs from Example 1 only in that, in the bidirectional synchronous stretching process, the stretching ratio in TD was 8.3 times, and the stretching ratio in MD was 5.6 times.

### Comparative Example 2

The comparative example provides a BOPP material with a thickness of 3.6 µm. The present comparative example differs from Example 2 only in that, in the bidirectional synchronous stretching process, the stretching ratio in TD was 8.3 times, and the stretching ratio in MD was 5.6 times.

### Comparative Example 3

The comparative example provides a BOPP material with a thickness of 4.5 µm. The present comparative example differs from Example 3 only in that, in the bidirectional synchronous stretching process, the stretching ratio in TD was 8.3 times, and the stretching ratio in MD was 5.6 times.

### Comparative Example 4

The comparative example provides a conductive film and differs from Example 6 in that, the BOPP material provided in Comparative Example 3 was selected as the substrate film.

### Test Example

The modified BOPP materials provided in Example 1 to Example 3 and the conventional BOPP materials provided in Comparative Example 1 to Example 3 were selected to test their properties.

The thickness was measured with a caliper by laminating the layers. The thickness was measured using a caliper. Generally, 10 layers of the same material were stacked, and the air was discharged by hard tooling. The thickness D of 10 layers was measured using a caliper. The thickness of one layer of film was calculated based on d = D/10.

The tensile property was tested by a tensile machine method. The tensile property test method includes: placing the initial film to be tested on a sampler; cutting the sample with a width of 15 mm by means of a sampler; setting, on a computer terminal, parameters of a product to be tested, such as a running speed of a tension machine of 50 MM/min, and an original gauge distance, and other related parameters; placing and fixing the sample to be tested in upper and lower chucks, and clicking START at a control terminal to obtain corresponding data of tensile strength and elongation at break at the computer terminal.

The results are as follows:

**[Table 1] Data of Material Properties**

| Item | | Unit | Example 1 | Comparative Example 1 | Example 2 | Comparative Example 2 | Example 3 | Comparative Example 3 |
|---|---|---|---|---|---|---|---|---|
| Thickness | Specified thickness | µm | 3.20 | 3.20 | 3.60 | 3.60 | 4.50 | 4.50 |
| | Average thickness of 10 layers | µm | 3.24 | 3.25 | 3.65 | 3.53 | 4.56 | 4.53 |
| | Gravimetric thickness | µm | 3.22 | 3.19 | 3.61 | 3.51 | 4.50 | 4.47 |
| Tensile strength | MD | N/mm² | 250.7 | 183 | 247.9 | 193.6 | 234.3 | 181.3 |
| | TD | | 253.7 | 240.3 | 277.2 | 256.5 | 296.3 | 277.8 |
| Elongation at break | MD | % | 80.4 | 83.1 | 85.8 | 95 | 97.2 | 111 |
| | TD | | 57.2 | 50.3 | 65.9 | 62.7 | 74.9 | 63.2 |
| Modulus of elasticity | MD | N/mm² | 2621.8 | 1791.1 | 2290.6 | 1777.1 | 2278.4 | 1823.2 |
| | TD | | 2755.1 | 2254.5 | 2568.9 | 2215.0 | 3151.9 | 2920.1 |
| Roughness | Ra | AK | 0.087 - 0.103 | 0.087 - 0.103 | 0.095 - 0.098 | 0.095 - 0.098 | 0.086 - 0.087 | 0.086 - 0.087 |
| | | AK·Rz | 0.700 | 0.700 | 0.76 - 0.77 | 0.76 - 0.77 | 0.58 - 0.64 | 0.58 - 0.64 |
| | | AK·Rm ax | 0.86 - 0.88 | 0.86 - 0.88 | 0.91 - 0.96 | 0.91 - 0.96 | 0.68 - 0.74 | 0.68 - 0.74 |
| | | CR | 0.087 - 0.103 | 0.087 - 0.103 | 0.096 - 0.097 | 0.096 - 0.097 | 0.84 - 0.86 | 0.84 - 0.86 |
| | | CR·Rz | 0.68 - 0.73 | 0.68 - 0.73 | 0.73 - 0.79 | 0.73 - 0.79 | 0.59 - 0.71 | 0.59 - 0.71 |
| | | CR·Rm ax | 0.84 - 0.87 | 0.84 - 0.87 | 0.9 - 0.96 | 0.9 - 0.96 | 0.74 - 0.79 | 0.74 - 0.79 |

It can be known from Table 1 that, the modified BOPP materials provided in Example 1 to Example 3 have higher tensile strengths in the MD and TD than those of Comparative Example 1 to Comparative Example 3, respectively, and the MD tensile strength is improved more. The elongation at break of the modified BOPP materials provided in Example 1 to Example 3 decreases slightly in the MD and increases slightly in the TD. By using the method that slightly reduces the MD elongation at break, the MD tensile strength was significantly improved. In this way, when it is used to manufacture the conductive film, the elongation of the product can meet the standard requirement, and the MD tensile strength of the conductive film can be improved, thereby improving the yield in the manufacturing section and the bearing strength at the product end.

The conductive films provided in Example 4 to Example 6 and Comparative Example 4 were selected to test their tensile properties by means of a tensile machine. The tensile property test method includes: placing the initial film to be tested on a sampler; cutting the sample with a width of 15 mm by using a sampler; setting, on a computer terminal, parameters of the product to be tested, such as a running speed of the tension machine of 50 MM/min, an original gauge distance, and other related parameters; placing the sample to be tested in the upper and lower chucks, tightening the sample, and clicking START at a control end to obtain corresponding data of tensile strength and elongation at break on the computer terminal.

The results are as follows.

**[Table 2] Test Result**

| | MD elongation | MD tensile strength |
|---|---|---|
| Example 4 | 3.0-5.5 % | 142-165 MPa |
| Example 5 | 3.2-6 % | 140-160 MPa |
| Example 6 | 4.5-9 % | 135-150 MPa |
| Example 4 | 1-2.5 % | 110-125 MPa |

As can be seen from Table 2, the MD elongation and MD tensile strength of the conductive film prepared in Example 4 to Example 6, which use the modified BOPP as the substrate film, are higher than those of the conventional conductive film provided in Comparative Example 4, and the tensile strength and elongation can reduce the loss caused by the strip breakage of the conductive film during processing and improve the yield.

The above are mere the preferred embodiments of the present disclosure and are not intended to limit the present disclosure. Those skilled in the art can make various modifications and variations. Any modification, equivalent replacement, improvement, and the like made within the spirit and principles of the present disclosure shall be included in the scope of protection of the present disclosure.

### Industrial practicality

The conductive film provided by the present disclosure uses a polypropylene film with a MD tensile strength greater than or equal to 200 MPa and a MD elongation at break greater than or equal to 75%, which is obtained through a biaxial stretching modification, as the substrate film. Compared with the conventional BOPP, this substrate film has better tensile strength and elongation at break, which improves the tensile property of the substrate film, thereby improving the tensile property of the conductive film and reducing the occurrence of tear and damage of a current collector in the use of the battery material. Therefore, the conductive film provided in the present disclosure can be widely used as a current collector in electrode plates and batteries.

## Claims

1. A conductive film, having a multi-layer structure, wherein the conductive film comprises:
a substrate film, wherein the substrate film is a modified bidirectionally oriented polypropylene film;
a functional layer; and
a protective layer,
wherein the functional layer and the protective layer are sequentially arranged on the substrate film, wherein a tensile strength in a mechanical direction of the substrate film is greater than or equal to 200 MPa, and wherein an elongation at break in the mechanical direction of the substrate film is greater than or equal to 75%.

2. The conductive film according to claim 1, wherein the tensile strength in the mechanical direction of the substrate film ranges from 220 MPa to 260 MPa.

3. The conductive film according to claim 1 or 2, wherein the substrate film is prepared by a method comprising:
performing, under a condition that a stretching ratio in a width direction of the substrate film ranges from 8 times to 10 times and a stretching ratio in the mechanical direction of the substrate film is greater than or equal to 6.2 times, a bidirectional synchronous stretching on a polypropylene film by using a bidirectional synchronous stretching process.

4. The conductive film according to claim 3, wherein the stretching ratio in the width direction of the substrate film ranges from 8 times to 8.5 times, and wherein the stretching ratio in the mechanical direction of the substrate film ranges from 6.5 times to 6.8 times.

5. The conductive film according to any one of claims 1 to 4, wherein the substrate film has a thickness ranging from 2.0 µm to 8.0 µm.

6. The conductive film according to claim 5, wherein:
when the thickness of the substrate film ranges from 3 µm to 3.3 µm, the elongation at break in the mechanical direction of the substrate film is greater than or equal to 75%; or
when the thickness of the substrate film ranges from 3.4 µm to 3.8 µm, the elongation at break in the mechanical direction of the substrate film is greater than or equal to 80%; or
when the thickness of the substrate film ranges from 4 µm to 5 µm, the elongation at break in the mechanical direction of the substrate film is greater than or equal to 90%.

7. The conductive film according to any one of claims 1 to 6, further comprising an adhesive layer and a transition layer that are arranged between the substrate film and the functional layer, wherein the adhesive layer and the transition layer are sequentially arranged on the substrate film.

8. The conductive film according to any one of claims 1 to 6, wherein the functional layer and the protective layer are sequentially arranged on each of two opposite surfaces of the substrate film.

9. The conductive film according to claim 8, further comprising an adhesive layer and a transition layer that are sequentially arranged on each of the two opposite surfaces of the substrate film, wherein the adhesive layer and the transition layer are arranged between the substrate film and the functional layer.

10. The conductive film according to claim 7, wherein the adhesive layer is made of NiCr.

11. The conductive film according to claim 7, wherein the transition layer is made of Cu.

12. The conductive film according to any one of claims 1 to 11, wherein the protective layer is a coating layer made of an organic material having antioxygenic property.

13. An electrode plate, comprising:
the conductive film according to any one of claims 1 to 12; and
an active material coated on the conductive film.

14. A battery, comprising:
a housing;
a battery cell accommodated in the housing;
an insulation member arranged between the battery cell and the housing; and
a top cover assembly disposed to cover the housing and connected to the battery cell through a tab,
wherein the battery cell comprises the electrode plate according to claim 13.

15. A preparation process for the conductive film according to any one of claims 1 to 13, comprising:
performing a bidirectional synchronous stretching on a casting sheet to obtain a film material, wherein a stretching ratio in a width direction ranges from 8 times to 10 times, and wherein a stretching ratio in a mechanical direction is greater than or equal to 6.2 times;
winding the stretched film material, standing, and aging to obtain the substrate film; and
sequentially forming the functional layer and the protective layer on a surface of the substrate film.

16. The preparation process for the conductive film according to claim 15, wherein a production line speed of the bidirectional synchronous stretching ranges from 230 m/min to 260 m/min.

17. The preparation process for the conductive film according to claim 15 or 16, wherein the stretching ratio in the width direction of the substrate film ranges from 8 times to 8.5 times, and wherein the stretching ratio in the mechanical direction of the substrate film ranges from 6.5 times to 6.8 times.

18. The preparation process for the conductive film according to any one of claims 15 to 17, wherein said standing and aging comprises:
placing the stretched film material in an environment with a cleanliness level of 100,000, a temperature of 25°C ± 5°C, and a humidity ranging from 40% to 70%, for 34 hours to 38 hours.

19. The preparation process for the conductive film according to any one of claims 15 to 18, further comprising, prior to said forming the functional layer and the protective layer:
forming an adhesive layer and a transition layer on the surface of the substrate film, wherein the functional layer and the protective layer are sequentially arranged on a surface of the transition layer.

20. The preparation process for the conductive film according to any one of claims 15 to 19, further comprising, prior to said performing the bidirectional synchronous stretching on the casting sheet:
melting masterbatches;
performing extrusion by controlling and maintaining a temperature of a melting extrusion section at 210°C to 260°C; and
flow-casting the casting sheet by controlling a temperature of the casting sheet at 60°C to 100°C.
